# EUROPEAN PATENT APPLICATION

(11) **EP 4 571 225 A1**
(43) Date of publication of application: **18.06.2025**
(21) Application number: 24836236.0
(22) Date of filing: 20.06.2024
(51) Int. Cl.: F26B 5/04, F26B 21/08, F26B 25/04, F26B 17/20, F26B 21/00, F26B 25/16, F26B 17/18, F25B 25/00, F25B 41/31

(54) **VACUUM CONDENSATION DRYER**

(30) Priority: 05.07.2023 KR 20230087082; 13.07.2023 KR 20230091289
(71) Applicant: LG Chem, Ltd., Seoul 07336 (KR)
(72) Inventor: CHO, Wonseok, Daejeon 34122 (KR); KIM, Hong Goo, Daejeon 34122 (KR); YOUN, Jin Hee, Daejeon 34122 (KR); PARK, Wonchan, Daejeon 34122 (KR)
(74) Representative: Plasseraud IP
(86) International application number: PCT/KR2024/008551
(87) International publication number: WO 2025/009788

(57) **Abstract**

A vacuum condensation drier is disclosed. The vacuum condensation drier may include: a drier configured to dry and discharge a raw material containing a solvent through heat-exchange between the raw material and a heat transfer fluid and discharge an evaporation solvent evaporated in the drying process; a condenser configured to receive the evaporation solvent from the drier through an evaporation solvent line, condense the evaporation solvent into a condensate solvent through heat-exchange with a refrigerant, and discharge the condensate refrigerant; a heat pump configured to recover heat energy from the refrigerant through heat-exchange between a heat-exchange medium and the refrigerant by circulating the heat-exchange medium, and supply the recovered heat energy to the heat transfer fluid through heat-exchange with the heat-exchange medium; a vacuum pump connected to the condenser and configured to reduce pressure inside the condenser and discharge non-condensable gas produced in the condensation process of the solvent; and a heat transfer fluid tank disposed on a line connecting the heat pump and the drier, including a heat transfer fluid heater that heats the heat transfer fluid, and configured to supply a heated heat transfer fluid to the line.

## Description

### [Technical Field]

### CROSS-REFERENCE TO RELATED APPLICATION

This application claims priority to and the benefit of Korean Patent Application Nos. 10-2023-0087082 and 10-2023-0091289 filed in the Korean Intellectual Property Office on July 05, 2023 and July 13, 2023, the entire contents of which are incorporated herein by reference.

The present disclosure relates to a vacuum condensation drier. In more detail, an exemplary embodiment of the present disclosure relates to a vacuum condensation drier equipped with a heat pump that recovers latent heat generated in condensation of an evaporation solvent in a condenser and supplies the recovered latent heat to the drier, thereby being able to reduce the energy used to dry a raw material and minimize carbon discharge. Another exemplary embodiment of the present disclosure relates to a vacuum condensation drier that can minimize inflow of non-condensable external air into the drier by preheating and feeding a raw material into the drier.

### [Background Art]

In the chemical industry, particle-shaped products (e.g., a dried material) are produced by obtaining moisture-containing particles (e.g., a raw material) through a chemical reaction or other methods and drying the moisture-containing particles in a drier. As driers that are generally used in the chemical industry to dry particles, there are a fluidized bed drier and an indirect heating vacuum condensation drier.

The fluidized bed drier is configured to dry products therein using hot air that is supplied into the drier. In detail, the product in the drier is fluidized by blowing hot air into the drier, and simultaneously, energy required for evaporation of a solvent (moisture) is supplied, and the evaporated solvent and hazardous/harmful substances are discharged to a post process facility with the hot air. However, since the fluidized bed drier using strong hot air, fine particles may be scattered, and accordingly, there is a risk of dust explosions. Further, a stagnant flow zone is generated, so hot spot may be formed and there is a risk of fire due to the high-temperature hot air. Further, since a small amount of hazardous/harmful substances produced in drying are discharged with a large amount of hot air, the capacity of the post process facility increases, the post process cost increases, only some of the energy supplied by the hot air is used to dry products and the other is wasted as exhaust gas, so the energy efficiency is low.

The indirect heating vacuum condensation drier is configured to dry products outside a jacket therein using a heat transfer fluid flowing through the jacket. In detail, a product is dried by supplying a heat transfer fluid into the jacket in the drier, the evaporated solvent is condensed by a condenser and then discharged, and some non-condensable gas is discharged to a vacuum pump. The vacuum pump is connected to the condenser and the drier and can decrease the saturation pressure and drying temperature of the solvent (moisture) in the drier. However, the indirect heating vacuum condensation drier has to separately supply energy for drying a product and energy for condensing a solvent, so the entire energy efficiency is low.

Meanwhile, the vacuum condensation drier can be classified into a batch-type vacuum condensation drier and a continuous-type vacuum condensation drier.

The batch-type vacuum condensation drier has an inlet and an outlet that can be opened and closed. A user opens the inlet, puts a raw material into the drier by a set amount, closes the inlet, and then begins drying. When drying of the raw material is finished, the user opens the outlet and can discharge the dried material from the drier. However, the batch-type vacuum condensation drier can dry only a set amount of raw material at a time and it is not possible to additionally feed a raw material during drying, so the capacity of the drier has to be increased to increase the drying amount.

In the continuous-type vacuum condensation drier, feeding of a raw material, drying of a raw material, and discharging of a dried material are performed in a continuous type. That is, a raw material is continuously fed into the continuous-type vacuum condensation drier, the fed raw material is moved to an outlet while being dried in the drier, and the dried material is also continuously discharged. Since feeding of a raw material, drying of a raw material, and discharging of a dried material are performed in a continuous type, it is possible to increase the drying amount even without increasing the capacity of the continuous-type vacuum condensation drier. However, since non-condensable external air also flows into the drier when a raw material is fed into the drier, it influences the degree of vacuum inside the drier, whereby it may deteriorate the drying performance and may increase the flow rate of the non-condensable gas to the vacuum pump or the post process facility. Accordingly, it is required to increase the capacity of the vacuum pump in order to maintain the degree of vacuum inside the drier, and the energy that is used at the vacuum pump or the post process facility increases.

This background is provided to help understand the background of the present disclosure and may include matters that are not the related art known to those skilled in the art.

### [Detailed Description of Invention]

### [Technical Problem]

The present disclosure attempts to provide a vacuum condensation drier equipped with a heat pump capable of reducing energy used for drying a raw material and minimizing carbon emissions by using a heat pump that recovers latent heat generated when an evaporated solvent is condensed in a condenser and supplies the recovered latent heat to a dryer.

Further, the present disclosure attempts to provide a vacuum condensation drier that can be smoothly operated without a specific heat source or a cooling source when it is restarted by including a heat transfer fluid tank having a heat transfer fluid heater and disposed in a heat transfer fluid supply line or a refrigerant tank having a refrigerant cooler and disposed in a refrigerant supply line.

In addition, the present disclosure attempts to provide a vacuum condensation drier that includes a raw material preheater at the upstream side further than the drier and preheats a raw material that is fed into the drier.

### [Technical Solution]

According to an exemplary embodiment of the present disclosure, a vacuum condensation drier includes: a drier configured to dry and discharge a raw material containing a solvent through heat-exchange between the raw material and a heat transfer fluid and discharge an evaporation solvent evaporated in the drying process; a condenser configured to receive the evaporation solvent from the drier through an evaporation solvent line, condense the evaporation solvent into a condensate solvent through heat-exchange with a refrigerant, and discharge the condensate refrigerant; a heat pump configured to recover heat energy from the refrigerant through heat-exchange between a heat-exchange medium and the refrigerant by circulating the heat-exchange medium, and supply the recovered heat energy to the heat transfer fluid through heat-exchange with the heat-exchange medium; a vacuum pump connected to the condenser and configured to reduce pressure inside the condenser and discharge non-condensable gas produced in the condensation process of the solvent; a heat transfer fluid supply line configured to supply heat transfer fluid supplied with the heat energy to the drier from the heat pump; a heat transfer fluid recovery line configured to recover the heat transfer fluid, which exchanged heat with the raw material, to the heat pump from the drier; a refrigerant supply line configured to supply the refrigerant, which exchanged heat with the heat-exchange medium, to the condenser from the heat pump; a refrigerant recovery line configured to recover the refrigerant, which recovered heat energy from the evaporation solvent, to the heat pump from the condenser; and a heat transfer fluid tank disposed on the heat transfer fluid supply line or the heat transfer fluid recovery line, comprising a heat transfer fluid heater that heats the heat transfer fluid, and configured to supply the heated heat transfer fluid to the heat transfer fluid supply line or the heat transfer fluid recovery line.

The heat transfer fluid heater may be disposed on the heat transfer fluid supply line to supply a heated heat transfer fluid to the drier through the heat transfer fluid supply line.

The vacuum condensation driver may further include a refrigerant tank disposed on the refrigerant supply line or the refrigerant recovery line, including a refrigerant cooler that cools a refrigerant, and configured to supply a cooled refrigerant to the refrigerant supply line or the refrigerant recovery line.

The refrigerant cooler may be disposed on the refrigerant supply line to supply the cooled refrigerant to the condenser through the refrigerant supply line.

The heat transfer fluid heater or the refrigerant cooler may be controlled to operate when the vacuum condensation drier is stopped.

The heat transfer fluid heater may operate such that temperature of the heat transfer fluid becomes a set heat transfer fluid temperature or higher, or the refrigerant cooler may operate such that temperature of the refrigerant becomes a set refrigerant temperature or lower.

The heat pump may include: a heat-exchange medium circulation line through which the heat-exchange medium circulates; a first heat exchanger disposed on the heat-exchange medium circulation line and configured to supply heat energy to the heat transfer fluid through heat-exchange between the heat transfer fluid and the heat-exchange medium; an expansion valve disposed on the heat-exchange medium circulation line and expanding the heat-exchange medium that exchanged heat with the heat transfer fluid; a second heat exchanger disposed on the heat-exchange medium circulation line and configured to recover heat energy of the refrigerant through heat-exchange between the refrigerant and the heat-exchange medium; and a compressor disposed on the heat-exchange medium circulation line and compressing the heat-exchange medium that exchanged heat with the refrigerant.

The vacuum condensation drier may further include a recovery tank connected to the condenser through a condensate solvent line and receiving a condensate solvent of the condenser, wherein the vacuum pump may be connected to the recovery tank through a non-condensable gas recovery line to discharge non-condensable gas in the condenser and the recovery tank.

The vacuum condensation drier may further include a raw material preheater configured to continuously receive and preheat a raw material containing a solvent and continuously discharge the preheated raw material containing a solvent, wherein the drier may continuously receive and dry the preheated raw material containing a solvent from the raw material preheater.

The raw material preheater may include a preheating housing, and the preheating housing may be configured to transmit heat to a raw material containing a solvent therein

The drier may include: a drier housing; a raw material inlet formed at an upper portion of a side portion of the drier housing; a raw material outlet formed at a lower portion of another side portion of the drier housing; and a screw rotatably disposed in the drier housing, and a raw material containing a solvent may be fed into the drier housing through the raw material inlet, the raw material containing a solvent may be dried while being moved by the screw that rotates to the another side portion of the drier housing, and the dried raw material may be discharged out of the drier housing through the raw material outlet.

The drier may further include: a heat transfer fluid inlet formed on a side of the drier housing; and a heat transfer fluid outlet formed on another side of the drier housing, and a heat transfer fluid flowing in the drier through the heat transfer fluid inlet may exchange heat with the raw material containing a solvent while moving to the another side and may flow out of the drier through the heat transfer fluid outlet.

### [Advantageous Effects]

According to an exemplary embodiment of the present disclosure, it is possible to reduce the energy used to dry a raw material and minimize carbon discharge using a heat pump that recovers latent heat generated in condensation of an evaporation solvent in a condenser and supplies the recovered latent heat to the drier.

Further, since when the vacuum condensation drier is stopped, the heat transfer fluid heater heats a heat transfer fluid or the refrigerant cooler cools a refrigerant, it is possible to supply a sufficient amount of heat for drying or recover a sufficient amount of heat for condensation even without a high-output heating facility or cooling facility in restarting. Accordingly, it is possible to minimize variation of the producibility and quality in the early stage of drying.

According to another exemplary embodiment of the present disclosure, it is possible to preheat a raw material that is fed into the drier by including a raw material preheater at an upstream side further than the drier. It is possible to decrease the partial pressure of non-condensable gas by increasing the partial pressure of a condensable solvent, and accordingly, it is possible to reduce the necessity for increasing the capacity of the vacuum pump by reducing the flow rate of the non-condensable gas that flows into the drier.

Other effects that may be obtained or are predicted by an exemplary embodiment will be explicitly or implicitly described in a detailed description of an exemplary embodiment. That is, various effects that are predicted according to an exemplary embodiment will be described in the following detailed description.

### [Brief Description of the Drawings]

Exemplary embodiments of the present specification may be better understood by referring to the following description in conjunction with the accompanying drawings, where like reference numerals refer to identical or functionally similar elements.
FIG. 1 is a schematic diagram of a vacuum condensation drier according to an exemplary embodiment of the present disclosure.
FIG. 2 is a schematic diagram of a heat pump of FIG. 1.
FIG. 3 is a schematic diagram of a vacuum condensation drier according to another exemplary embodiment of the present disclosure.
FIG. 4 is a view schematically showing a preheater of FIG. 3.

It should be understood that the drawings referenced above are not necessarily drawn to scale, and present rather simplified representations of various preferred features illustrating the basic principles of the present disclosure. For example, specific design features of the present disclosure, including specific dimensions, direction, position, and shape, will be determined in part by specific intended applications and use environments.

### [Mode for Invention]

The terminology used herein is for the purpose of describing particular exemplary embodiments only, and is not intended to limit the present disclosure. As used herein, singular forms are intended to also include plural forms, unless the context clearly dictates otherwise. The terms "includes" and/or "including," specify the cited features, integers, steps, operations, elements, and/or the presence of components when used herein, but it will also be understood that these terms do not exclude the presence or addition of one or more of other features, integers, steps, operations, elements, components, and/or groups thereof. As used herein, the term "and/or" includes any one or all combinations of the associated listed items.

Additionally, it is understood that one or more of the methods below or aspects thereof may be executed by at least one or more controllers. The term "controller" may refer to a hardware device including a memory and a processor. The memory is configured to store program instructions, and the processor is specifically programmed to execute the program instructions to perform one or more processes described in more detail below. The controller may control operations of units, modules, parts, devices, or the like, as described herein. It is also understood that methods below may be executed by an apparatus including a controller in conjunction with one or more other components, as will be appreciated by those skilled in the art.

In addition, the controller of the present disclosure may be implemented as a non-transitory computer-readable recording medium including executable program instructions executed by a processor. Examples of the computer-readable recording medium include ROM, RAM, compact disk (CD) ROM, magnetic tapes, floppy disks, flash drives, smart cards, and optical data storage devices, but are not limited thereto. The computer-readable recording medium may also be distributed throughout a computer network so that the program instructions may be stored and executed in a distributed manner, for example, on a telematics server or a controller Area Network (CAN).

According to the present disclosure, a vacuum condensation drier includes a drier that dries a raw material and evaporates a solvent through heat-exchange with a heat transfer fluid and discharges the evaporation solvent, a condenser that condenses the evaporation solvent through heat-exchange with a refrigerant, and a heat pump that recovers heat energy from the refrigerant by circulating a heat-exchange medium and supplies the recovered heat energy to the heat transfer fluid. The heat energy recovered from the refrigerant in the condenser is used as at least a portion of the heat energy required for solvent evaporation in the drier, so the energy efficiency is increased.

Further, the vacuum condensation drier further includes a heat transfer fluid supply line that supplies a heat transfer fluid to the drier from the heat pump, a heat transfer fluid recovery line that recovers a heat transfer fluid to the heat pump from the drier, a refrigerant supply line that supplies a refrigerant to the condenser from the heat pump, a refrigerant recovery line that recovers a refrigerant to the heat pump from the condenser, a heat transfer fluid tank including a heat transfer fluid heater disposed in the heat transfer fluid supply line or the heat transfer fluid recovery line and heating a heat transfer fluid, or a refrigerant tank including a refrigerant cooler disposed in the refrigerant supply line or the refrigerant recovery line and cooling a refrigerant. When the vacuum condensation drier is stopped, the heat transfer fluid heater heats a heat transfer fluid or the refrigerant cooler cools a refrigerant. Heat energy or cooling energy required for normal operation when restarting the vacuum condensation drier can be prepared through low-output heating facility or cooling facility. Accordingly, it is possible to supply a sufficient amount of heat for drying or recover a sufficient amount of heat for condensation even without a high-output heating facility or cooling facility when restarting the vacuum condensation drier. Accordingly, it is possible to minimize variation of the producibility and quality in the early stage of drying.

Further, the vacuum condensation drier further includes a vacuum pump connected to the condenser and configured to reduce the pressure inside the condenser and discharge non-condensable gas produced during condensation of a solvent, and a recovery tank connected to the condenser and receiving a condensate solvent from the condenser. The vacuum pump is connected to the condenser through the recovery tank and discharges non-condensable gas in the condenser and the recovery tank. The vacuum pump is connected to the drier through an evaporation solvent line connecting the drier and the condenser and can reduce not only the pressure inside the condenser, but the pressure inside the drier. Accordingly, it is possible to reduce the saturation pressure and drying temperature of the solvent in the drier. Accordingly, it is possible to sufficiently dry a raw material in the drier even through an indirect heating type.

Further, the vacuum condensation drier further includes a raw material preheater configured to continuously receive and preheat a raw material containing a solvent and continuously discharge the preheated raw material containing the solvent, and the drier is configured to continuously receive and dry the preheated raw material containing the solvent from the raw material preheater. The raw material preheater can increase and decrease the partial pressure of a condensable solvent and the partial pressure of non-condensable gas, respectively, that are fed into the drier together with a raw material by preheating the raw material containing the solvent. Accordingly, it is possible to minimize a decrease of the degree of vacuum of the drier by reducing the flow rate of the non-condensable gas flowing into the drier, and it is not required to increase the capacity of the vacuum pump in order to maintain the degree of vacuum. Further, it is possible to reduce the flow rate of the non-condensable gas to the vacuum pump by reducing inflow of the non-condensable gas into the drier, whereby it is possible to further reduce the energy that is consumed by the vacuum pump and the post process facility.

Hereafter, an exemplary embodiment of the present disclosure is described in detail with reference to the accompanying drawings.

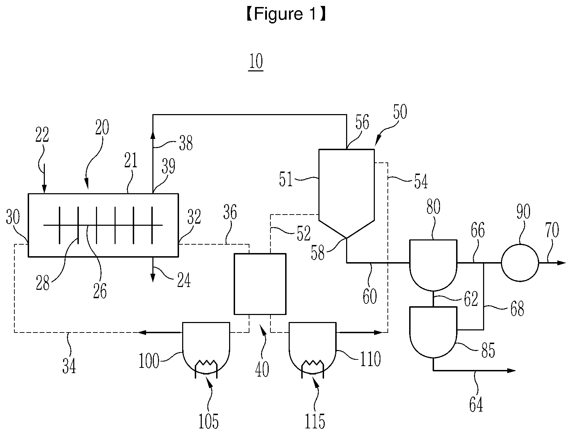

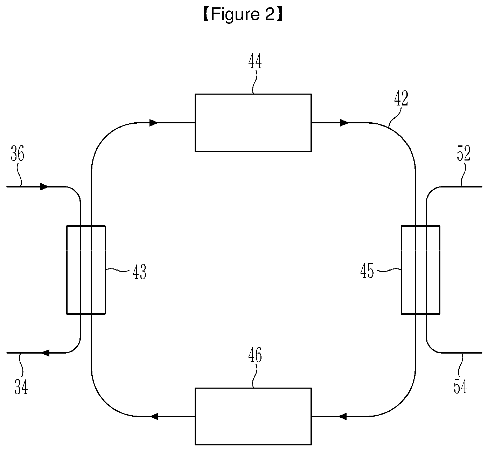

FIG. 1 is a schematic diagram of a vacuum condensation drier according to an exemplary embodiment of the present disclosure. FIG. 2 is a schematic diagram of a heat pump of FIG. 1.

As shown in FIG. 1, a vacuum condensation drier 10 according to an exemplary embodiment of the present disclosure includes a drier 20, a condenser 50, and a heat pump 40.

The drier 20 is configured to dry a raw material and evaporates a solvent through heat-exchange with a heat transfer fluid and to discharge the evaporation solvent. The drier 20 includes a drier housing 21 having a drying space formed therein. A raw material inlet 22 is formed at the upper portion of a side portion of the drier housing 21, so a raw material containing a solvent required to be dried is fed into the drying space in the drier housing 21 through the raw material inlet 22. A raw material outlet 24 is formed at the lower portion of another side portion of the drier housing 21, so a dried raw material is discharged out of the drier housing 21 through the raw material outlet 24.

Further, a heat transfer fluid inlet 30 is formed on a side of the drier housing 21, so a hot heat transfer fluid for drying flows into the drier housing 21 through the heat transfer fluid inlet 30. A heat transfer fluid outlet 32 is formed on another side of the drier housing 21, so, particularly, a heat transfer fluid that exchanged heat with a solvent contained in a raw material flows out of the drier housing 21 through the heat transfer fluid outlet 32. A jacket, etc. are formed in the drier housing 21, so the heat transfer fluid flowing in the drier housing 21 through the heat transfer fluid inlet 30 moves through the jacket and does not come in direct contact with the raw material in the drier housing 21. That is, the drier 20 according to an exemplary embodiment of the present disclosure uses an indirect heating type that heats and dries a raw material using a heat transfer fluid moving in a jacket, etc. Accordingly, in the drier, fine particles may not be scattered, a risk of dust explosion is reduced, a hot spot is not formed, and a risk of fire can be reduced.

A screw 26 is rotatably disposed in the drier housing 21 and at least one thread 28 is formed on the outer circumferential surface of the screw 26. The screw 26 moves a raw material from a side to another side while rotating in the drier housing 21. Accordingly, the heat energy of a heat transfer fluid can evenly transfer to the raw material that is transferred by the screw 26.

An evaporation solvent outlet 39 connected to an evaporation solvent line 38 is formed at the upper portion of another side portion of the drier housing 21, an evaporation solvent evaporated by heat-exchange with a heat transfer fluid in the drier housing 21 flows out to the evaporation solvent line 38 through the evaporation solvent outlet 39.

The condenser 50 is configured to condense the evaporation solvent from the drier 20 through heat-exchange with a refrigerant and discharge the condensed condensate solvent and non-condensable gas. The condenser 50 includes a condenser housing 51 having a condensing space formed therein. An evaporation solvent inlet 56 connected to the evaporation solvent line 38 is formed at the upper portion of the condenser housing 51, so an evaporation solvent evaporated in the drier 20 flows into the condensing space in the condenser housing 51 through the evaporation solvent line 38 and the evaporation solvent inlet 56. A condensate solvent outlet 58 is formed at the lower portion of the condenser housing 51, so a condensate solvent condensed through heat-exchange with a refrigerant in the condenser housing 51 flows out of the condenser housing 51 through the condensate solvent outlet 58. Further, a refrigerant supply line 54 is connected to a side of the condenser housing 51, so a cold refrigerant for condensing a solvent flows into the condenser housing 51 through the refrigerant supply line 54. A refrigerant recovery line 52 is connected to another side of the condenser housing 51, so a refrigerant recovering heat energy by exchanging heat with an evaporation solvent flows out of the condenser housing 51 through the refrigerant recovery line 52. A jacket, etc. are formed in the condenser housing 51, so a refrigerant flowing in the condenser housing 51 through the refrigerant supply line 54 moves through the jacket and does not come in direct contact with the solvent in the condenser housing 51.

The heat pump 40 is configured to recover heat energy from the refrigerant and supply the recovered heat energy to a heat transfer fluid by circulating a heat-exchange medium. As shown in FIG. 1 and FIG. 2, the heat pup 40 includes a heat-exchange medium circulation line 42, first and second heat exchangers 43 and 45, an expansion valve 44, and a compressor 46.

The heat-exchange medium circulation line 42 connects the first heat exchanger 43, the expansion valve 44, the second heat exchanger 45, and the compressor 46 such that a heat-exchange medium circulates sequentially through the first heat exchanger 43, the expansion valve 44, the second heat exchanger 45, and the compressor 46.

The first heat exchanger 43 is disposed on the heat-exchange medium circulation line 42 at the downstream side further than the compressor 46 and transmits heat energy to a heat transfer fluid through heat-exchange between the heat-exchange medium circulating through the heat-exchange medium circulation line 42 and the heat transfer fluid. The first heat exchanger 43 is connected to a heat transfer fluid supply line 34, so a heat transfer fluid supplied with heat energy through heat-exchange with a heat-exchange medium is supplied to the drier 20. Further, the first heat exchanger 43 is connected to a heat transfer fluid recovery line 36, so a heat transfer fluid that exchanged heat with a raw material is recovered from the drier 20. The heat transfer fluid supply line 34 and the heat transfer fluid recovery line 36 are connected to each other in the first heat exchanger 43.

The expansion valve 44 is disposed on the heat-exchange medium circulation line 42 at the downstream side further than the first heat exchanger 43 and expands the heat-exchange medium that supplied heat energy to a heat transfer fluid in the first heat exchanger 43, thereby reducing the temperature of the heat-exchange medium.

The second heat exchanger 45 is disposed on the heat-exchange medium circulation line 42 at the downstream side further than the expansion valve 44 and recovers heat energy of a refrigerant through heat-exchange between the heat-exchange medium reduced in temperature through expansion in the expansion valve 44 and the refrigerant. The heat energy recovered from the refrigerant in the second heat exchanger 45 transfers to a heat transfer fluid in the first heat exchanger 43, whereby it is used to dry a raw material. Accordingly, it is possible to reduce the amount of energy required to be supplied from the outside to dry a raw material.

The second heat exchanger 45 is connected to the refrigerant supply line 54, so a refrigerant reduced in temperature through heat-exchange with a heat-exchange medium is supplied to the condenser 50. Further, the second heat exchanger 45 is connected to the refrigerant recovery line 52, so a refrigerant recovering heat energy through heat-exchange with an evaporation solvent is recovered from the condenser 50. The refrigerant supply line 54 and the refrigerant recovery line 52 are connected to each other in the second heat exchanger 45.

The compressor 46 is disposed on the heat-exchange medium circulation line 42 at the downstream side further than the second heat exchanger 45 and compresses the heat-exchange medium that recovered heat energy from a refrigerant in the second heat exchanger 45, thereby increasing the temperature of the heat-exchange medium. The heat-exchange medium compressed in the compressor 46 moves to the first heat exchanger 43 and circulates through the heat-exchange medium circulation line 42.

Referring to FIG. 1 again, the vacuum condensation drier 10 further includes a heat transfer fluid tank 100 and a refrigerant tank 110.

The heat transfer fluid tank 100 is disposed on the heat transfer fluid supply line 34 or the heat transfer fluid recovery line 36, temporarily stores the heat transfer fluid of the heat transfer fluid supply line 34 or the heat transfer fluid recovery line 36, and supplies the stored heat transfer fluid to the heat transfer fluid supply line 34 or the heat transfer fluid recovery line 36. In one example, the heat transfer fluid tank 100 is disposed on the heat transfer fluid supply line 34 and includes a heat transfer fluid heater 105 provided therein. The heat transfer fluid heater 105 heats the heat transfer fluid in the heat transfer fluid tank 100 and the heated heat transfer fluid can be supplied to the drier 20 through the heat transfer fluid supply line 34 when the vacuum condensation drier 10 is started or operated.

The refrigerant tank 110 is disposed on the refrigerant supply line 54 or the refrigerant recovery line 52, temporarily stores the refrigerant of the refrigerant supply line 54 or the refrigerant recovery line 52, and supplies the stored refrigerant to the refrigerant supply line 54 or the refrigerant recovery line 52. In one example, the refrigerant tank 110 is disposed on the refrigerant supply line 54 and includes a refrigerant cooler 115 provided therein. The refrigerant cooler 115 cools the refrigerant in the refrigerant tank 110 and the cooled refrigerant can be supplied to the condenser 50 through the refrigerant supply line 54 when the vacuum condensation drier 10 is started or operated.

The vacuum condensation drier 10 may further include a controller (not shown). The controller is connected to the heat transfer fluid heater 105 and/or the refrigerant cooler 115 and controls the heat transfer fluid heater 105 and/or the refrigerant cooler 115. In one example, when the vacuum condensation drier 10 is stopped, the controller controls the heat transfer fluid heater 105 to heat a heat transfer fluid or controls the refrigerant cooler 115 to cool a refrigerant. At the restart or during early operation of the vacuum condensation drier 10, the operation of the heat pump 40 alone may not be sufficient to dry a raw material or condense a solvent. In order to solve this problem, high-output heating facilities or cooling facilities that can supply sufficient heat energy or cooling energy have been used for normal operation in the early stage of drying. However, according to an exemplary embodiment of the present disclosure, when the vacuum condensation drier 10 is stopped, the heat transfer fluid heater 105 maintains the temperature of a heat transfer fluid over a set heat transfer fluid temperature by heating a heat transfer fluid or the refrigerant cooler 115 maintains the temperature of a refrigerant under a set refrigerant temperature by cooling the refrigerant. Accordingly, it is possible to supply a sufficient amount of heat for drying or recover a sufficient amount of heat for condensation even without a high-output heating facility or cooling facility at the restart or during early operation of the vacuum condensation drier 10. Accordingly, it is possible to minimize variation of the producibility and quality in the early stage of drying.

The vacuum condensation drier 10 further includes a vacuum pump 90 and recovery tanks 80 and 85. The vacuum condensation drier 10 including two recovery tanks 80 and 85 is exemplarily shown in FIG. 1, but the number of recovery tanks is not limited two and one or more recovery tank may be used.

A first recovery tank 80 is connected to the condenser 50 through a first condensate solvent line 60. Accordingly, a condensate solvent condensed in the condenser 50 and non-condensed non-condensable gas are discharged to the first recovery tank 80 through the first condensate solvent line 60.

A second recovery tank 85 is connected to the first recovery tank 80 through a second condensate solvent line 62. Accordingly, a condensate solvent and a portion of non-condensable gas in the first recovery tank 80 move to the second recovery tank 85 through the second condensate solvent line 62. The second recovery tank 85 is connected to the a condensate solvent discharge line 64 and discharge condensate solvent through the condensate solvent discharge line 64.

The vacuum pump 90 is connected to the first recovery tank 80 through a first non-condensable gas recovery line 66, so a portion of the non-condensable gas in the first recovery tank 80 is suctioned to the vacuum pump 90 through the first non-condensable gas recovery line 66. Further, the vacuum pump 90 is connected to the second recovery tank 85 through a second non-condensable gas recovery line 68, so a portion of the non-condensable gas in the second recovery tank 85 is suctioned to the vacuum pump 90 through the second non-condensable gas recovery line 68. The vacuum pump 90 is connected to a non-condensable gas discharge line 70 and discharges suctioned non-condensable gas to a post process apparatus (not shown), etc. through the non-condensable gas discharge line 70.

The vacuum pump 90 is connected to the condenser 50 through the first and second non-condensable gas recovery lines 66 and 68 and the first and second condensate solvent lines 60 and 62, so it can reduce the pressure of the condenser 50. Further, the vacuum pump 90 is connected to the drier 20 through the evaporation solvent line 38 connecting the drier 20 and the condenser 50 and can reduce not only the pressure inside the condenser 50, but the pressure inside the drier 20. Accordingly, it is possible to reduce the saturation pressure and drying temperature of the solvent in the drier 20. Accordingly, it is possible to sufficiently dry a raw material in the drier 20 even through an indirect heating type.

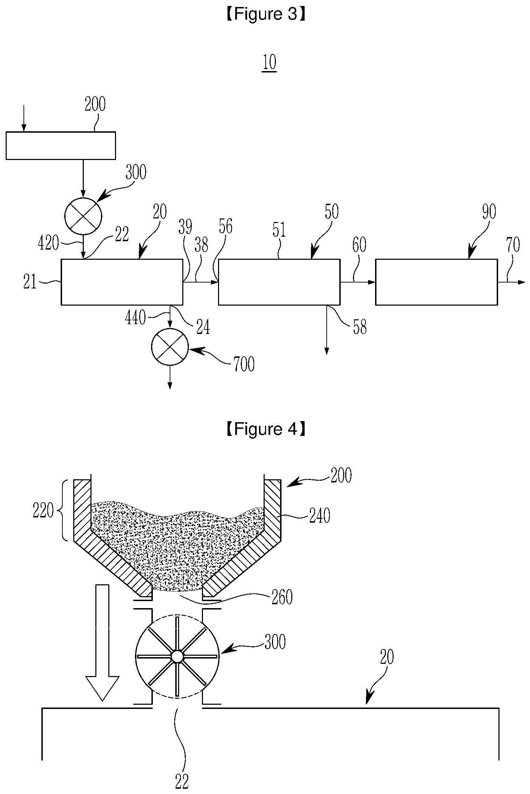

FIG. 3 is a schematic diagram of a vacuum condensation drier according to another exemplary embodiment of the present disclosure. FIG. 4 is a view schematically showing a preheater of FIG. 3.

As shown in FIG. 3, a vacuum condensation drier 10 according to another exemplary embodiment of the present disclosure includes a raw material preheater 200, a raw material feeder 300, a drier 20, a condenser 50, a vacuum pump 90, and a dried material discharger 700. It should be noted that the vacuum condensation drier 10 according to another exemplary embodiment of the present disclosure may also include a heat pump, similar to the vacuum condensation drier 10 according to an exemplary embodiment of the present disclosure, but it is not shown in FIG. 3 for the convenience of description. It should be understood that the configuration of the heat pump and the relationship of connection with the drier 20 and the condenser 50 in another exemplary embodiment of the present disclosure are the same as or very similar to the configuration of the heat pump 40 and the relationship of connection with the drier 20 and the condenser 50 in an exemplary embodiment of the present disclosure.

The raw material preheater 200 is configured to be continuously supplied with a raw material containing a solvent (e.g., moisture, etc.), to preheat the supplied raw material containing the solvent, and to continuously discharge the preheated raw material containing the solvent. As shown in FIG. 4, the raw material preheater 200 includes a preheating housing 240. The upper portion of the preheating housing 240 is open, whereby a raw material hopper 220 that is continuously supplied with a raw material containing a solvent is formed. Further, a raw material outlet 260 that continuously discharges a preheated raw material containing a solvent is formed at the lower portion of the preheating housing 26. The preheating housing 240 itself is configured to increase the temperature of a raw material (containing a solvent) therein by transmitting heat to the raw material. In one example, a jacket is formed in the preheating housing 240, so a hot heat transfer fluid can transmit heat to the raw material containing a solvent in the preheating housing 240 while flowing through the jacket. In another example, the preheating housing 240 is equipped with an electric heater, so it is possible to transmit heat to the raw material containing a solvent in the preheating housing 240. However, the heat transmission device of the raw material preheater 200 is not limited to the example and includes any devices that can transmit heat to the raw material containing a solvent in the preheating housing 240.

The raw material preheater 200 is configured to increase the solvent partial pressure in atmospheric gas flowing into the drier 20 together with a raw material by preheating the raw material containing a solvent to a set temperature. When the solvent partial pressure in the atmospheric gas is increased, the partial pressure of non-condensable gas in the atmospheric gas is decreased, so the flow rate of the non-condensable gas in the atmospheric gas flowing into the drier 20 is decreased.

**Table 1**

| temperature(°C) | aqueous vapor partial pressure(bar) | Air partial pressure (bar) |
|---|---|---|
| 60 | 0.20 | 0.81 |
| 70 | 0.31 | 0.70 |
| 80 | 0.47 | 0.54 |
| 90 | 0.70 | 0.31 |

Table 1 is a table showing aqueous vapor partial pressure in an atmospheric gas according to temperature in a saturated state. In this case, the aqueous vapor is a typical example of a solvent and the air is a typical example of non-condensable gas. When the temperature of atmospheric gas is 60°C, the aqueous vapor partial pressure is 0.20bar and the partial pressure of air is 0.81bar in the atmospheric gas, so it can be observed that the partial pressure of the air is considerably higher than the partial pressure of the aqueous vapor. Unlike, when the temperature of atmospheric gas is 90°C, the aqueous vapor partial pressure is 0.70bar and the partial pressure of air is 0.31bar in the atmospheric gas, so it can be observed that the partial pressure of the aqueous vapor is considerably higher than the partial pressure of the air. As described above, when the temperature of atmospheric gas increases, the aqueous vapor partial pressure increases but the partial pressure of the air decreases, so the amount of the air in the atmospheric gas decreases. Accordingly, when the raw material preheater 200 preheats a raw material containing a solvent (e.g., moisture, etc.) to a set temperature, the partial pressure of an evaporation solvent in the atmospheric gas around the raw material increases and the partial pressure of non-condensable gas decreases, whereby the flow rate of the evaporation solvent in the atmospheric gas flowing into the drier 20 together with the raw material increases and the flow rate of the non-condensable gas decreases. The suction rate of the vacuum pump 90 for maintaining the degree of vacuum inside the vacuum condensation drier 10 is determined by the flow rate of non-condensable gas that the vacuum pump 90 needs to discharge. However, an evaporation solvent flowing in the drier 20 is condensed in the condenser 50 and/or the vacuum pump 90 together with the solvent evaporated in the drier 20, so the effect on the suction rate of the vacuum pump 90 is negligible. Accordingly, it is not required to increase the capacity of the vacuum pump 90 in order to maintain the degree of vacuum inside the vacuum condensation drier 10 and it is possible to reduce the energy that is consumed by the vacuum pump 90.

Meanwhile, the cross-sectional area of the raw material hopper 220 through which a raw material is fed is sufficiently larger than the cross-sectional area of the raw material outlet 260 through which a preheated raw material is discharged, so the raw material fed in the preheating housing 240 can stay therein for a sufficient time. Accordingly, the raw material fed in the raw material preheater 200 can receive a sufficient amount of heat from the preheating housing 240. In this case, the cross-sectional area of the raw material outlet 260 may be set by a person of an ordinary skill in the art in accordance with the diameter of a raw material, the amount of heat that is transmitted to a raw material per hour by the preheating housing 240, a set temperature, etc.

The raw material feeder 300 is disposed between the raw material preheater 200 and the drier 20 and is configured to feed the raw material containing a solvent preheated by the raw material preheater 200 into the upper portion of a side of the drier 20. The raw material feeder 300, though not limited to these, may be a rotary valve, a drum feeder, etc. The raw material feeder 300 continuously discharges a preheated raw material containing a solvent to a raw material feed line 420 and the raw material feed line 420 is connected to the inlet 22 of the drier 20, so the preheated raw material containing a solvent is fed into the drier 20 through the raw material inlet 22.

The drier 20 is configured to continuously receive the raw material containing a solvent preheated by the raw material preheater 200 through the raw material feeder 300, dry the raw material containing a solvent through heat-exchange with a heat transfer fluid, continuously discharge the dried material, and discharge an evaporation solvent evaporated in the process of drying the raw material. The drier 20 includes a drier housing 21 having a drying space formed therein. A raw material inlet 22 connected to the raw material feed line 420 is formed at the upper portion of a side portion of the drier housing 21, so a preheated raw material containing a solvent is fed into the drying space in the drier housing 21 through the raw material inlet 22. A raw material outlet 24 is formed at the lower portion of another side portion of the drier housing 21 and the raw material outlet 24 is connected to a raw material discharge line 440. Accordingly, the dried raw material is continuously discharged out of the drier housing 21 through the raw material discharge line 440.

Further, a heat transfer fluid inlet (30, see FIG. 1) is formed on a side of the drier housing 21 and the heat transfer fluid inlet 30 is connected to a heat transfer fluid supply line (34, see FIG. 1 and FIG. 2). Accordingly, a heat transfer fluid supplied with heat energy through heat-exchange with a heat-exchange medium in the heat pump can be supplied to the drier 20 through the heat transfer fluid supply line 34 and the heat transfer fluid inlet 30. A heat transfer fluid outlet (32, see FIG. 1) is formed on another side of the drier housing 21 and the heat transfer fluid outlet 32 is connected to a heat transfer fluid recovery line (36, see FIG. 1 and FIG. 2). Accordingly, a heat transfer fluid that exchanges heat with a raw material, particularly, the solvent contained in the raw material flows out of the drier housing 21 through the heat transfer fluid outlet 32 and the heat transfer fluid recovery line 36, so it can be recovered to the heat pump. A jacket, etc. are formed in the drier housing 21, so the heat transfer fluid flowing in the drier housing 21 through the heat transfer fluid inlet 30 moves through the jacket and does not come in direct contact with the raw material in the drier housing 21.

A transfer device (e.g., the screw 26 of FIG. 1, etc.) that stirs a raw material and transfers the raw material from a side portion to another side portion may be rotatably provided in the drier housing 21. The transfer device stirs a raw material to ensure that heat is evenly transmitted to the raw material. The transfer device, for example, may be a screw 26 having threads 28 formed on the outer circumferential surface, a paddle shaft having multiple paddles, etc., but is not limited thereto. The transfer device may be any device that performs the function of stirring a raw material and transferring the raw material from a side portion to another side portion.

An evaporation solvent outlet 39 connected to an evaporation solvent line 38 is formed at the upper portion of another side portion of the drier housing 21, an evaporation solvent evaporated by heat-exchange with a heat transfer fluid in the drier housing 21 flows out to the evaporation solvent line 38 through the evaporation solvent outlet 39.

The dried material discharger 700 is disposed on the raw material discharge line 440 and is configured to continuously discharge a raw material dried in the drier 20. The dried material discharger 700, though not limited to these, may be a rotary valve, a drum feeder, etc.

The condenser 50 is configured to continuously receive an evaporation solvent from the drier 20, condense the evaporation solvent through heat-exchange with a refrigerant, and discharge the condensed condensate solvent and non-condensable gas. The condenser 50 includes a condenser housing 51 having a condensing space formed therein. An evaporation solvent inlet 56 connected to the evaporation solvent line 38 is formed at the upper portion of a side portion of the condenser housing 51, so an evaporation solvent evaporated in the drier 20 flows into the condensing space in the condenser housing 51 through the evaporation solvent line 38 and the evaporation solvent inlet 56 together with the evaporation solvent flowing in the drier 20. A condensate solvent outlet 58 is formed at the lower portion of the condenser housing 51, so a condensate solvent condensed through heat-exchange with a refrigerant in the condenser housing 51 flows out of the condenser housing 51 through the condensate solvent outlet 58. Further, a refrigerant supply line (54, see FIG. 1) is connected to a side of the condenser housing 51, so a cold refrigerant for condensing a solvent flows into the condenser housing 51 through the refrigerant supply line 54. A refrigerant recovery line (52, see FIG. 1) is connected to another side of the condenser housing 51, so a refrigerant recovering heat energy by exchanging heat with an evaporation solvent flows out of the condenser housing 51 through the refrigerant recovery line 52. A jacket, etc. are formed in the condenser housing 51, so a refrigerant flowing in the condenser housing 51 through the refrigerant supply line 54 moves through the jacket and does not come in direct contact with the solvent in the condenser housing 51.

A first condensate solvent line 60 is connected to another side of the condenser housing 51, so a condensate solvent condensed in the condenser housing 51 and non-condensable gas not condensed therein are discharged out of the condenser housing 51 through the first condensate solvent line 60.

The heat pump is configured to recover heat energy from the refrigerant and supply the recovered heat energy to a heat transfer fluid by circulating a heat-exchange medium. As shown in FIG. 1 and FIG. 2, the heat pup 40 includes a heat-exchange medium circulation line 42, first and second heat exchangers 43 and 45, an expansion valve 44, and a compressor 46. The heat pump is the same as or very similar to the heat pump 40 shown in FIG. 1 and FIG. 2 in terms of function, so it is no longer described in detail.

The vacuum condensation drier 10 according to another exemplary embodiment of the present disclosure may further include a heat transfer fluid tank (100, see FIG. 1) disposed on the heat transfer fluid supply line 34 or the heat transfer fluid recovery line 36, and a refrigerant tank (110, see FIG. 1) disposed on the refrigerant supply line 54 or the refrigerant recovery line 52. The positions and functions of the heat transfer fluid tank 100 and the refrigerant tank 110 are the same as or very similar to the positions and functions of the heat transfer fluid tank 100 and the refrigerant tank 110 shown in FIG. 1, so they are nor longer described in detail.

The vacuum condensation drier 10 according to another exemplary embodiment of the present disclosure may further include a vacuum pump 90 and recovery tanks 80 and 85. The connection relationships and functions of the vacuum pump 90 and recovery tanks 80 and 85 according to another exemplary embodiment of the present disclosure are the same as or very similar to the connection relationships and functions of the vacuum pump 90 and recovery tanks 80 and 85 according to an exemplary embodiment of the present disclosure, so they are no longer described in detail.

While the present disclosure has been described in connection with what is presently considered to be practical exemplary embodiments, it is to be understood that the present disclosure is not limited to the disclosed exemplary embodiments. On the contrary, it is intended to cover various modifications and equivalent arrangements included within the spirit and scope of the appended claims.

## Claims

1. A vacuum condensation drier comprising:
a drier configured to dry and discharge a raw material containing a solvent through heat-exchange between the raw material and a heat transfer fluid and discharge an evaporation solvent evaporated in a drying process;
a condenser configured to receive the evaporation solvent from the drier through an evaporation solvent line, condense the evaporation solvent into a condensate solvent through heat-exchange with a refrigerant, and discharge the condensate refrigerant;
a heat pump configured to recover heat energy from the refrigerant through heat-exchange between a heat-exchange medium and the refrigerant by circulating the heat-exchange medium, and supply the recovered heat energy to the heat transfer fluid through heat-exchange with the heat-exchange medium;
a vacuum pump connected to the condenser and configured to reduce pressure inside the condenser and discharge non-condensable gas produced in a condensation process of the solvent;
a heat transfer fluid supply line configured to supply the heat transfer fluid supplied with the heat energy to the drier from the heat pump;
a heat transfer fluid recovery line configured to recover the heat transfer fluid, which exchanged the heat with the raw material, to the heat pump from the drier;
a refrigerant supply line configured to supply the refrigerant, which exchanged the heat with the heat-exchange medium, to the condenser from the heat pump;
a refrigerant recovery line configured to recover the refrigerant, which recovered the heat energy from the evaporation solvent, to the heat pump from the condenser; and
a heat transfer fluid tank disposed on the heat transfer fluid supply line or the heat transfer fluid recovery line, comprising a heat transfer fluid heater that heats the heat transfer fluid, and configured to supply the heated heat transfer fluid to the heat transfer fluid supply line or the heat transfer fluid recovery line.

2. The vacuum condensation drier of claim 1, wherein:
the heat transfer fluid heater is disposed on the heat transfer fluid supply line to supply the heated heat transfer fluid to the drier through the heat transfer fluid supply line.

3. The vacuum condensation drier of claim 1, further comprising
a refrigerant tank disposed on the refrigerant supply line or the refrigerant recovery line, comprising a refrigerant cooler that cools the refrigerant, and configured to supply the cooled refrigerant to the refrigerant supply line or the refrigerant recovery line.

4. The vacuum condensation drier of claim 3, wherein:
the refrigerant cooler is disposed on the refrigerant supply line to supply the cooled refrigerant to the condenser through the refrigerant supply line.

5. The vacuum condensation drier of claim 3, wherein:
the heat transfer fluid heater or the refrigerant cooler is controlled to operate when the vacuum condensation drier is stopped.

6. The vacuum condensation drier of claim 3, wherein:
the heat transfer fluid heater operates such that temperature of the heat transfer fluid becomes a set heat transfer fluid temperature or higher, or the refrigerant cooler operates such that temperature of the refrigerant becomes a set refrigerant temperature or lower.

7. The vacuum condensation drier of claim 1, wherein the heat pump comprises:
a heat-exchange medium circulation line through which the heat-exchange medium circulates;
a first heat exchanger disposed on the heat-exchange medium circulation line and configured to supply the heat energy to the heat transfer fluid through heat-exchange between the heat transfer fluid and the heat-exchange medium;
an expansion valve disposed on the heat-exchange medium circulation line and expanding the heat-exchange medium that exchanged the heat with the heat transfer fluid;
a second heat exchanger disposed on the heat-exchange medium circulation line and configured to recover the heat energy of the refrigerant through heat-exchange between the refrigerant and the heat-exchange medium; and
a compressor disposed on the heat-exchange medium circulation line and compressing the heat-exchange medium that exchanged the heat with the refrigerant.

8. The vacuum condensation drier of claim 1, further comprising
a recovery tank connected to the condenser through a condensate solvent line and receiving the condensate solvent of the condenser,
wherein the vacuum pump is connected to the recovery tank through a non-condensable gas recovery line to discharge the non-condensable gas in the condenser and the recovery tank.

9. The vacuum condensation drier of claim 1, further comprising
a raw material preheater configured to continuously receive and preheat the raw material containing the solvent and continuously discharge the preheated raw material containing the solvent,
wherein the drier continuously receives and dries the preheated raw material containing the solvent from the raw material preheater.

10. The vacuum condensation drier of claim 9, wherein:
the raw material preheater includes a preheating housing, and
the preheating housing is configured to transmit the heat to the raw material containing the solvent therein.

11. The vacuum condensation drier of claim 1, wherein the drier comprises:
a drier housing;
a raw material inlet formed at an upper portion of a side portion of the drier housing;
a raw material outlet formed at a lower portion of another side portion of the drier housing; and
a screw rotatably disposed in the drier housing, and
wherein the raw material containing the solvent is fed into the drier housing through the raw material inlet, the raw material containing the solvent is dried while being moved by the screw that rotates to the another side portion of the drier housing, and the dried raw material is discharged out of the drier housing through the raw material outlet.

12. The vacuum condensation drier of claim 11, wherein the drier further comprises:
a heat transfer fluid inlet formed on a side of the drier housing; and
a heat transfer fluid outlet formed on another side of the drier housing, and
wherein the heat transfer fluid flowing in the drier through the heat transfer fluid inlet exchanges the heat with the raw material containing the solvent while moving to the another side and flows out of the drier through the heat transfer fluid outlet.
